# EUROPEAN PATENT APPLICATION

(11) **EP 4 763 739 A1**
(43) Date of publication of application: **24.06.2026**
(21) Application number: 24856164.9
(22) Date of filing: 09.07.2024
(51) Int. Cl.: B65D 65/40, C09J 167/00, C09J 167/03, C09J 175/06

(54) **PACKAGING MATERIAL**

(30) Priority: 18.08.2023 JP 2023133676
(71) Applicant: artience Co., Ltd., Chuo-ku Tokyo 104-0031 (JP); Toyo-Morton, Ltd., Chuo-ku Tokyo 1040031 (JP); Toppan Holdings Inc., Tokyo 110-0016 (JP)
(72) Inventor: UCHIYAMA Yusei, Tokyo 104-0031 (JP); OSHIMA Ryota, Tokyo 104-0031 (JP); MASUKO Tatsuya, Tokyo 110-8560 (JP); ARITA Takeshi, Tokyo 110-8560 (JP); KUDO Shigeki, Tokyo 110-8560 (JP)
(74) Representative: Pfenning, Meinig & Partner mbB
(86) International application number: PCT/JP2024/024690
(87) International publication number: WO 2025/041469

(57) **Abstract**

Provided is a packaging material having both high appearance and high retort performance. A packaging material according to the present disclosure is a packaging material for thermally sterilized food, and comprises at least a transparent vapor-deposited film layer, an adhesive layer and a plastic film layer in this order. The adhesive layer is a cured product of a solventless adhesive. The solventless adhesive contains a polyol main agent (A) containing a polyester polyol and a polyisocyanate curing agent (B) containing an aliphatic polyisocyanate, and has a viscosity at 40°C of 80 Pa·s or less after 12 hours at 40°C after blending the polyol main agent (A) with the polyisocyanate curing agent (B).

## Description

### Technical Field

The disclosure relates to packaging material, and particularly to packaging material for heat-sterilized food.

### Related Art

Patent Document 1 discloses a packaging material that can perform heat sterilization when accommodating food.

### Citation List

### Patent Document

Patent Document 1: Japanese Patent Application Laid-Open Publication No. 2021-066031

### SUMMARY OF INVENTION

### Technical Problem

In recent years, due to strengthened legal regulations, environmental conservation, safety considerations, regulations on atmospheric emission of volatile organic compounds, etc., there has been an increasing demand for adhesives with reduced solvents, preferably containing no solvents. The adhesive constituting the packaging material disclosed in Patent Document 1 uses a solventless adhesive that contains no organic solvent.

Meanwhile, solvent-free reactive adhesives that combine polyol and polyisocyanate have issues such that, because the adhesives contain no solvent, the viscosity during coating tends to become high, the smoothness of the coated surface decreases, fine bubbles are generated during lamination, and appearance defects occur. Additionally, urethane-based adhesives that combine polyol and polyisocyanate have issues such that during aging, polyisocyanate and water react to generate carbon dioxide gas (bubbles), resulting in appearance defects. Furthermore, since these are packaging material for food, such materials need to have retort resistance sufficient to withstand heat sterilization treatment.

The disclosure has been made in view of these issues, and is to provide a packaging material that combines high appearance and high retort performance.

### Solution to Problem

A packaging material according to the disclosure is a packaging material for heat-sterilized food and includes: in order, at least a transparent vapor-deposited film layer, an adhesive layer, and a plastic film layer. The adhesive layer is a cured product of a solventless adhesive. The solventless adhesive includes: a polyol main agent (A), containing polyester polyol; and a polyisocyanate curing agent (B), containing aliphatic polyisocyanate. A viscosity at 40°C is of 80 Pa·s or less after 12 hours at 40°C after blending of the polyol main agent (A) and the polyisocyanate curing agent (B).

In addition, it may also be that, in the packaging material according to the disclosure, the polyol main agent (A) includes a first polyester polyol (a1), and the first polyester polyol (a1) has constituent units derived from polybasic acid having aromatic rings and/or monofunctional carboxylic acid having aromatic rings, and contains the constituent units in a total amount of 20 mol% or more based on a total amount of carboxyl group components

In addition, it may also be that, in the packaging material according to the disclosure, the first polyester polyol (a1) contains constituent units derived from polyhydric alcohol having alkylene oxide groups in an amount of 0 to 30 mol% based on a total amount of hydroxyl group components.

In addition, it may also be that, in the packaging material according to the disclosure, the polyol main agent (A) further contains a second polyester polyol (a2), the second polyester polyol (a2) has constituent units derived from polybasic acid having aromatic rings and/or monofunctional carboxylic acid having aromatic rings, and contains the constituent units in a total amount of 10 mol% or less based on the total amount of carboxyl group components.

In addition, it may also be that, in the packaging material according to the disclosure, the second polyester polyol (a2) contains 0 to 20 mol% of constituent units derived from polyhydric alcohol having alkylene oxide groups based on a total amount of hydroxyl group components.

In addition, it may also be that, in the packaging material according to the disclosure, the solventless adhesive contains an inorganic filler.

### Effects of Invention

According to the disclosure, a packaging material that combines high appearance and high retort performance can be provided.

### DESCRIPTION OF EMBODIMENTS

The packaging material according to the disclosure is a packaging material for heat-sterilized food, and includes: in order, at least a transparent vapor-deposited film layer, an adhesive layer, and a plastic film layer, where the adhesive layer is a cured product of a solvent-free adhesive, the solvent-free adhesive includes a polyol main agent (A) containing polyester polyol and a polyisocyanate curing agent (B) containing aliphatic polyisocyanate, and the viscosity at 40°C after 12 hours at 40°C after blending of the polyol main agent (A) and the polyisocyanate curing agent (B) is 80 Pa·s or less. When the viscosity at 40°C after 12 hours at 40°C after blending is 80 Pa·s or less, the time for bubbles to escape from the adhesive during aging can be secured, so the amount of bubbles remaining after curing completes can be suppressed. By containing polyester polyol and aliphatic polyisocyanate and satisfying the viscosity, both high appearance and high retort performance can be achieved. The viscosity can be measured with a cone-plate viscometer based on JIS K7117-2, and is preferably 75 Pa·s or less

### <Adhesive layer>

The adhesive layer according to the disclosure is a cured product of a solventless adhesive. The solventless adhesive includes a polyol main agent (A) containing polyester polyol and a polyisocyanate curing agent (B) containing aliphatic polyisocyanate. Additionally, the solventless adhesive may be applied as a mixture of the polyol main agent (A) containing polyester polyol and the polyisocyanate curing agent (B) containing aliphatic polyisocyanate, or may be applied separately and cured.

### (Polyol main agent (A))

The polyester polyol contained in the polyol main agent (A) is a compound having a hydroxyl group and an ester bond, and has the ester bond as a repeating unit. Examples of such polyester polyol include polyester polyol obtained by reacting a carboxyl group component and a hydroxyl group component; polyester polyol obtained by ring-opening polymerization of lactones such as polycaprolactone, polyvalerolactone, and poly(β-methyl-γ-valerolactone).

Examples of the carboxyl group component include polybasic acids, and a monofunctional carboxylic acid may be used in combination. Examples of such carboxyl group component include monofunctional carboxylic acids having aromatic rings such as benzoic acid, phenylacetic acid, and 3-phenylpropionic acid; polybasic acids having aromatic rings such as terephthalic acid, isophthalic acid, naphthalenedicarboxylic acid, phthalic anhydride, trimellitic acid, trimellitic anhydride, pyromellitic acid, pyromellitic anhydride, naphthalic acid, and naphthalic anhydride; aliphatic polybasic acids such as adipic acid, azelaic acid, sebacic acid, succinic acid, glutaric acid, dodecanecarboxylic acid, fumaric acid, 1,3-cyclopentanedicarboxylic acid, 1,4-cyclohexanedicarboxylic acid, tetrahydrophthalic anhydride, hexahydrophthalic anhydride, maleic anhydride, and itaconic anhydride; alkyl esters thereof; or mixtures thereof.

Examples of the hydroxyl group component include polyhydric alcohol, and monofunctional alcohols may be used in combination. Examples of such hydroxyl group component include polyhydric alcohol having alkylene oxide chains such as diethylene glycol, dipropylene glycol, triethylene glycol, dineopentyl glycol, polyoxyethylene glycol, polyoxypropylene glycol, polytetramethylene ether glycol, and polyether polyol; polyhydric alcohol having no alkylene oxide chains such as ethylene glycol, 1,2-propanediol, 1,3-propanediol, 1,3-butanediol, 1,4-butanediol, neopentyl glycol, trimethylolpropane, glycerin, 1,6-hexanediol, 1,4-butanediol, 1,4-cyclohexanedimethanol, 3-methyl-1,5-pentanediol, 2-methyl-1,3-propanediol, 3,3'-dimethylolheptane, and 1,9-nonanediol; or mixtures thereof.

Additionally, polycarbonate polyol, polyolefin polyol, acrylic polyol, polyurethane polyol, or mixtures thereof may be used as the hydroxyl group component.

The polyester polyols may be acid-modified materials in which a part of the hydroxyl groups in the polyester polyol are acid-modified, or may be materials in which carboxyl groups are introduced by reacting with acid anhydride. Additionally, the polyester polyol may be a material in which urethane bonds are introduced by reacting with diisocyanate.

Examples of the acid anhydride include pyromellitic anhydride, mellitic anhydride, trimellitic anhydride, and trimellitic acid ester anhydride. Examples of the trimellitic acid ester anhydride include ethylene glycol bisanhydrotrimellitate and propylene glycol bisanhydrotrimellitate.

Examples of the diisocyanate include 2,4-tolylene diisocyanate, 2,6-tolylene diisocyanate, xylylene diisocyanate, diphenylmethane diisocyanate, isophorone diisocyanate, 1,5-naphthalene diisocyanate, hexamethylene diisocyanate, and hydrogenated diphenylmethane diisocyanate.

The polyol main agent (A) may contain one type of polyester polyol, or multiple types of polyester polyol. As the multiple types of polyester polyol, for example, from the viewpoint of retort resistance, it may be that at least one polyester polyol is polyester polyol obtained by reacting a carboxyl group component containing polybasic acid having aromatic rings with a hydroxyl group component.

Additionally, as the multiple types of polyester polyol, examples include polyester polyol in which the proportion of polybasic acid components having aromatic rings and monofunctional carboxylic acid having aromatic rings is 15% by mass or more based on the total amount of all the carboxyl group components and all the hydroxyl group components forming the polyester polyol, and polyester polyol in which the proportion of polybasic acid components having aromatic rings and monofunctional carboxylic acid having aromatic rings is 10% by mass or less. By using such types of polyester polyol in combination, retort resistance is improved, and furthermore, low viscosity and excellent coatability are achieved, and the appearance is improved.

The polyol main agent (A) may contain a first polyester polyol (a1). The first polyester polyol (a1) has constituent units derived from polybasic acid having aromatic rings and/or monofunctional carboxylic acid having aromatic rings, and contains such constituent units in a total amount of 20 mol% or more, more preferably 25 mol% or more, based on the total amount of carboxyl group components. By using polyester polyol containing the first polyester polyol (a1), it becomes possible to improve the retort resistance of the adhesive.

From the viewpoint of adhesive strength development, the proportion of the constituent units derived from polybasic acid having aromatic rings and monofunctional carboxylic acid having aromatic rings based on the total amount of carboxyl group components is preferably 80 mol% or less, more preferably 60 mol% or less, and still more preferably 50 mol% or less.

Furthermore, from the viewpoint of retort resistance, the first polyester polyol (a1) contains constituent units derived from polyhydric alcohol having alkylene oxide groups in an amount of 0 to 30 mol%, more preferably 0 to 25 mol%, based on the total amount of hydroxyl group components.

Additionally, from the viewpoint of wettability to the coated surface, the first polyester polyol (a1) contains constituent units derived from polyhydric alcohol having alkyl group side chains in an amount of 50 mol% or more and 85 mol% or less based on the total amount of hydroxyl group components. Examples of polyhydric alcohol having alkyl group side chains include 1,2-propanediol, 1,3-butanediol, neopentyl glycol, and 2-methyl-1,3-propanediol.

From the viewpoint of coatability, the number average molecular weight of the polyester polyol (a1) is preferably 500 or more and 3,000 or less, more preferably 2,000 or less, and still more preferably 1,500 or less.

From the viewpoint of adhesive strength development, the polyester polyol (a1) may be an acid-modified material in which a part of the hydroxyl groups are acid-modified by reacting with acid anhydride, and is preferably one in which the carboxyl group is introduced by reacting with acid anhydride. On the other hand, from the viewpoint of suppressing viscosity increase after 12 hours at 40°C, the acid value of the polyester polyol (a1) is preferably 2 mgKOH/g or more, preferably 15 mgKOH/g or less, more preferably 10 mgKOH/g or less, and still more preferably 5 mgKOH/g or less.

From the viewpoint of curability of the adhesive, the hydroxyl value of the polyester polyol (a1) is preferably 30 mgKOH/g or more, more preferably 50 mgKOH/g or more, and preferably 200 mgKOH/g or less, more preferably 150 mgKOH/g or less.

The polyol main agent (A) may further contain a second polyester polyol (a2). The second polyester polyol (a2) has constituent units derived from polybasic acid having aromatic rings and/or monofunctional carboxylic acid having aromatic rings, and contains such constituent units in a total amount of 10 mol% or less, more preferably 8 mol% or less, based on the total amount of carboxyl group components. By using polyester polyol containing such second polyester polyol (a2) having few constituent units derived from aromatic rings, not only can the viscosity of the polyester polyol (a2) be reduced, but also the viscosity increase of the adhesive after blending can be suppressed, and the appearance is improved.

Furthermore, from the viewpoint of retort resistance, the second polyester polyol (a2) contains constituent units derived from polyhydric alcohol having alkylene oxide groups in an amount of 0 to 20 mol%, more preferably 0 to 10 mol%, based on the total amount of hydroxyl group components.

Additionally, from the viewpoint of wettability to the coated surface, the polyester polyol (a2) preferably contains constituent units derived from polyhydric alcohol having alkyl group side chains in an amount of 80 mol% or more and 100 mol% or less based on the total amount of hydroxyl group components.

From the viewpoint of reducing the viscosity of the adhesive and improving coatability, the number average molecular weight of the polyester polyol (a2) is preferably 1,000 or more and 3,000 or less.

The polyester polyol (a2), from the viewpoint of suppressing viscosity increase after 12 hours at 40°C, has an acid value of preferably 5 mgKOH/g or less, more preferably 3 mgKOH/g or less.

From the viewpoint of curability of the adhesive, the hydroxyl value of the polyester polyol (a2) is preferably 30 mgKOH/g or more, more preferably 40 mgKOH/g or more, and preferably 200 mgKOH/g or less, more preferably 150 mgKOH/g or less.

The polyol main agent (A) may contain polyol other than polyester polyol, as long as the effects of the disclosure are not affected. Examples of such other polyol include polycarbonate polyol, polyether polyol, polyolefin polyol, acrylic polyol, silicone polyol, and fluorine-based polyol, and may be acid-modified materials in which a part of the hydroxyl groups are acid-modified, may be those in which carboxyl groups are introduced by reacting with acid anhydride, or may be those in which urethane bonds are introduced by reacting with diisocyanate.

### (Polyisocyanate curing agent (B))

The aliphatic polyisocyanate contained in the polyisocyanate curing agent (B) refers to a compound having two or more isocyanato groups, where the isocyanato groups are not directly bonded to aromatic rings.

Such aliphatic polyisocyanate is not limited to the following, but conventional aliphatic diisocyanate, alicyclic diisocyanate, or compounds derived from such diisocyanate can be used.

Examples of aliphatic polyisocyanate that can be used in the disclosure include aliphatic diisocyanates such as trimethylene diisocyanate, tetramethylene diisocyanate, hexamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, 2,6-diisocyanatomethylcaproate, m-xylylene diisocyanate; alicyclic diisocyanates such as 1,4-cyclohexane diisocyanate, 1,3-cyclohexane diisocyanate, 3-isocyanatomethyl-3,5,5-trimethylcyclohexyl isocyanate, 4,4'-methylenebis(cyclohexyl isocyanate), methyl 2,4-cyclohexane diisocyanate, methyl 2,6-cyclohexane diisocyanate, 1,4-bis(isocyanatomethyl)cyclohexane, 1,3-bis(isocyanatomethyl)cyclohexane; and polyisocyanates such as allophanate type, nurate type, biuret type, adduct type derivatives derived from the aliphatic diisocyanate or alicyclic diisocyanate, or composites thereof.

Additionally, as the aliphatic polyisocyanate, polyisocyanate having urethane bonds, which are reaction products of the aliphatic diisocyanate, alicyclic diisocyanate or derivatives thereof with hydroxyl group components, may be used. Examples of the hydroxyl group component used in the reaction include monofunctional alcohol and polyhydric alcohol, and the compounds described in the above section (Polyol main agent (A)) may be used. Furthermore, polyester polyol, polycarbonate polyol, polyolefin polyol, acrylic polyol, polyurethane polyol, and the like can also be used.

The derivative is preferably a nurate type or adduct type derivative, and particularly preferably an adduct type.

From the viewpoint of appearance and retort performance of the packaging material, the aliphatic polyisocyanate is preferably alicyclic diisocyanate, and more preferably derivatives of 3-isocyanatomethyl-3,5,5-trimethylcyclohexyl isocyanate. The alicyclic diisocyanate has low reactivity with the polyol main agent and can suppress the viscosity increase after 12 hours at 40°C.

The polyisocyanate curing agent (B) may contain polyisocyanate other than aliphatic polyisocyanate, as long as the effects of the disclosure are not impaired. Examples of such other polyisocyanates include aromatic polyisocyanates such as diphenylmethane diisocyanate and tolylene diisocyanate, or modified materials thereof.

### (Other components)

The solventless adhesive according to the disclosure may contain components other than the polyol main agent (A) and the polyisocyanate curing agent (B) in order to satisfy various required performance properties, and such components may be blended into either the polyol main agent (A) or the polyisocyanate curing agent (B), may be blended at the time of mixing the polyol main agent (A) and polyisocyanate curing agent (B), may be used individually, or may be used in combination of two or more types.

The solventless adhesive according to the disclosure may contain an inorganic filler. Examples of the inorganic filler include powders such as aluminum oxide, aluminum silicate, aluminum hydroxide, alumina white, potassium sulfate, zinc oxide, zinc carbonate, magnesium aluminate metasilicate, magnesium silicate, magnesium oxide, magnesium carbonate, magnesium hydroxide, barium titanate, barium sulfate, barium carbonate, calcium carbonate, calcium hydroxide, calcium oxide, calcium silicate, calcium sulfite, calcium sulfate, titanium oxide, silica, zeolite, activated carbon, kaolin, talc, pyrophyllite clay, silica stone, mica, graphite, sericite, montmorillonite, sericite, sepiolite, bentonite, perlite, zeolite, wollastonite, fluorite, and dolomite. By blending such filler into the solventless adhesive, the cohesive force of the solventless adhesive after coating is improved, and the appearance is improved.

The solventless adhesive according to the disclosure may contain a silane coupling agent, or oxygen acid of phosphorus or a derivative thereof for the purpose of improving adhesive strength and acid resistance, and is preferably 0.01 to 5% by mass, more preferably 0.02 to 3% by mass, relative to the mass of the polyol main agent (A).

Examples of the silane coupling agent include aminosilanes such as γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyldimethoxysilane, and N-phenyl-γ-aminopropyltrimethoxysilane; epoxysilanes such as β-(3,4-epoxycyclohexyl)ethyltrimethoxysilane, γ-glycidoxypropyltrimethoxysilane, and γ-glycidoxypropyltriethoxysilane; vinylsilanes such as vinyltris(β-methoxyethoxy)silane, vinyltriethoxysilane, vinyltrimethoxysilane, and γ-methacryloxypropyltrimethoxysilane; hexamethyldisilazane; and γ-mercaptopropyltrimethoxysilane.

The oxygen acid of phosphorus may be any acid having at least one free oxygen acid, and examples include phosphoric acids such as hypophosphorous acid, phosphorous acid, orthophosphoric acid, and phosphinic acid; and condensed phosphoric acids such as metaphosphoric acid, pyrophosphoric acid, tripolyphosphoric acid, polyphosphoric acid, and ultraphosphoric acid.

Examples of derivatives of oxygen acid of phosphorus include those obtained by partially esterifying the oxygen acid of phosphorus with alcohols while leaving at least one free oxygen acid. Examples of the alcohols include aliphatic alcohols such as methanol, ethanol, ethylene glycol, and glycerin; and aromatic alcohols such as phenol, xylenol, hydroquinone, catechol, and phloroglucinol.

The solventless adhesive of the disclosure may optionally contain additives such as fillers, softeners, anti-aging agents, stabilizers, adhesion promoters, leveling agents, antifoaming agents, plasticizers, tackifying resins, fibers, pot life extenders, antioxidants, ultraviolet absorbers, hydrolysis inhibitors, antifungal agents, thickeners, plasticizers, colorants such as pigments, and fillers.

In this manner, the solventless adhesive according to the disclosure has low viscosity and excellent coatability, resulting in good appearance, and can also have high retort resistance.

The solventless adhesive according to the disclosure becomes a cured product by bonding a transparent vapor-deposited film layer and a plastic film layer, which will be described later, and then curing. The packaging material according to the disclosure may have a configuration in which the adhesive layer, which is the cured product, is disposed between the transparent vapor-deposited film layer and the plastic film layer, and may further have other layers.

The method for manufacturing the packaging material according to the disclosure is not limited, and for example, it can be obtained by applying the solventless adhesive to the transparent vapor-deposited film layer, laminating the plastic film layer on the coated surface, and then curing the adhesive.

The coating temperature may be, for example, 40 to 100°C, preferably 60°C to 90°C, taking into consideration the workability and the viscosity of the solventless adhesive during heating. Such temperature is preferable from the viewpoint that elasticity can be imparted after coating and winding deviation can be prevented. Curing of the solventless adhesive may be performed at room temperature or during heating, and can be performed at a temperature of, for example, 20 to 60°C.

The coating amount of the solventless adhesive can be appropriately selected according to the type of film and coating conditions, and is preferably 1.0 to 5.0 g/m², more preferably 1.2 to 3.5 g/m².

### <Transparent vapor-deposited film layer>

The transparent vapor-deposited film layer according to the disclosure includes the vapor deposit of metal or metal oxide and a first base material. Examples of the metal or metal oxide include aluminum oxide, silicon oxide, magnesium oxide, tin oxide, and the like. In particular, from the viewpoint of retort performance of the packaging material, the metal or metal oxide is preferably aluminum oxide or silicon oxide. The metal or metal oxide can be formed by performing, for example, vacuum film formation. In vacuum film formation, physical vapor deposition or chemical vapor deposition can be used. Examples of physical vapor deposition include vacuum evaporation, sputtering, ion plating, and the like, but the disclosure is not limited thereto. Examples of chemical vapor deposition include thermal CVD, plasma CVD, photo CVD, and the like, but the disclosure is not limited thereto. Additionally, for the purpose of improving gas barrier properties and protecting the inorganic oxide layer, a gas barrier coating layer may be provided on the metal oxide layer. Although not particularly limited, the gas barrier coating layer may contain a hydroxyl group-containing polymer compound, and specifically, may be a heat-dried product of a composition containing at least one of a hydroxyl group-containing polymer compound and the hydrolysate thereof, and at least one selected from the group consisting of metal alkoxide, silane coupling agent, and the hydrolysate thereof. Examples of the first base material include polyester resin films such as polyethylene terephthalate (PET), polyethylene naphthalate (PEN), and polylactic acid (PLA); polyolefin resin films such as polyethylene (PE) and polypropylene (PP); polystyrene resin films; polyamide resin films such as nylon (NY) 6 and poly-p-xylylene adipamide (MXD6 nylon); polycarbonate resin films; polyacrylonitrile resin films; polyimide resin films; and the like.

The thickness of the transparent vapor-deposited film layer is preferably 5 µm or more and 50 µm or less, more preferably 10 µm or more and 30 µm or less.

### < Plastic film layer>

The plastic film layer according to the disclosure includes a second base material. Examples of the second base material include polyester resin films such as polyethylene terephthalate (PET), polyethylene naphthalate (PEN), and polylactic acid (PLA); polyolefin resin films such as polyethylene (PE) and polypropylene (PP); polystyrene resin films; polyamide resin films such as nylon (NY) 6 and poly-p-xylylene adipamide (MXD6 nylon); polycarbonate resin films; polyacrylonitrile resin films; and polyimide resin films.

The thickness of the plastic film layer is preferably 5 µm or more and 100 µm or less, more preferably 10 µm or more and 50 µm or less.

The transparent vapor-deposited film layer and the plastic film layer may be a single layer or a laminate in which multiple layers are laminated.

The packaging material according to the disclosure may further include an ink layer. The arrangement location of the ink layer is not limited. The ink layer may be provided on the transparent vapor-deposited film layer or on the plastic film layer, and may be in contact with the adhesive layer. The thickness of the ink layer is preferably 0.1 to 10 µm, more preferably 1 to 5 µm.

In this way, a packaging material that combines high appearance and high retort performance can be provided.

### Examples

The disclosure is described more specifically below by way of examples, but the following examples do not limit the scope of rights of the disclosure in any way. In the examples, "parts" represents "parts by mass" and "%" represents "mass%". The measurement methods for "viscosity", "number average molecular weight (Mn)", "hydroxyl value (OHV)", and "acid value (AV)" in the examples are as follows.

[Viscosity]: Measured using a cone-plate viscometer CV-1S manufactured by TOA Industry Co., Ltd. The temperature during measurement was 40°C.

[Number average molecular weight]: The polystyrene-equivalent molecular weight was used when THF was used as the developing solvent with GPC (manufactured by Shodex, GPC-104) equipped with an RI detector, using Shodex GPC LF-604 (manufactured by Shodex) as the column.

[Hydroxyl value]: Measured in accordance with JIS K1557-1.

[Acid value]: Measured in accordance with JIS K0070.

### <Synthesis of polyester polyol>

### (Synthesis Example 1) Polyester polyol (al-1)

175 parts of isophthalic acid, 320 parts of adipic acid, 49 parts of benzoic acid, 76 parts of ethylene glycol, and 380 parts of neopentyl glycol were charged into a reaction vessel, and heated to 150-240°C while stirring in a nitrogen gas flow to perform an esterification reaction. In the case where the acid value reaches 2.1 (mgKOH/g), the reaction temperature was set to 200°C, the inside of the reaction vessel was gradually depressurized, and the reaction was performed at 1.3 kPa or less for 30 minutes, followed by cooling to 110°C. Thereafter, 5.0 parts of trimellitic anhydride (TMA) was added and acid-modified at 110°C to obtain polyester polyol (a1-1) in which constituent units derived from polybasic acid having aromatic rings and monofunctional carboxylic acid were 40 mol% based on the total amount of carboxyl group components, and constituent units derived from polyhydric alcohol having alkylene oxide groups were 0 mol% based on the total amount of hydroxyl group components. The number average molecular weight was 750, the acid value was 3.6 mgKOH/g, and the hydroxyl value was 104 mgKOH/g.

### (Synthesis Example 2) Polyester polyol (a1-2)

274 parts of isophthalic acid, 447 parts of adipic acid, 94.9 parts of ethylene glycol, and 478 parts of neopentyl glycol were charged into a reaction vessel, and heated to 150-240°C while stirring in a nitrogen gas flow to perform an esterification reaction. When the acid value reached 2.2 (mgKOH/g), the reaction temperature was set to 200°C, the inside of the reaction vessel was gradually depressurized, and the reaction was performed at 1.3 kPa or less for 30 minutes, followed by cooling to 110°C. Thereafter, 7.0 parts of trimellitic anhydride was added and acid-modified at 110°C to obtain polyester polyol (al-2) in which constituent units derived from polybasic acid having aromatic rings and monofunctional carboxylic acid were 35 mol% based on the total amount of carboxyl group components, and constituent units derived from polyhydric alcohol having alkylene oxide groups were 0 mol% based on the total amount of hydroxyl group components. The number average molecular weight was 750, the acid value was 3.8 mgKOH/g, and the hydroxyl value was 104 mgKOH/g.

### (Synthesis Example 3) Polyester polyol (a1-3)

100 parts of isophthalic acid, 88 parts of adipic acid, 24 parts of ethylene glycol, and 125 parts of diethylene glycol were charged into a reaction vessel, and heated to 150-240°C while stirring in a nitrogen gas flow to perform an esterification reaction. When the acid value reached 2.0 (mgKOH/g), the reaction temperature was set to 200°C, the inside of the reaction vessel was gradually depressurized, and the reaction was performed at 1.3 kPa or less for 30 minutes, followed by cooling to 110°C. Thereafter, 2.0 parts of trimellitic anhydride was added and acid-modified at 110°C to obtain polyester polyol (al-3) in which constituent units derived from polybasic acid having aromatic rings and monofunctional carboxylic acid were 50 mol% based on the total amount of carboxyl group components, and constituent units derived from polyhydric alcohol having alkylene oxide groups were 75 mol% based on the total amount of hydroxyl group components. The number average molecular weight was 1,600, the acid value was 3.5 mgKOH/g, and the hydroxyl value was 67 mgKOH/g.

### (Synthesis Example 4) Polyester polyol (al-4)

100 parts of isophthalic acid, 88 parts of adipic acid, 72 parts of ethylene glycol, and 42 parts of diethylene glycol were charged into a reaction vessel, and heated to 150-240°C while stirring in a nitrogen gas flow to perform an esterification reaction. When the acid value reached 2.0 (mgKOH/g), the reaction temperature was set to 200°C, the inside of the reaction vessel was gradually depressurized, and the reaction was performed at 1.3 kPa or less for 30 minutes, followed by cooling to 110°C. Thereafter, 2.0 parts of trimellitic anhydride was added and acid-modified at 110°C to obtain polyester polyol (al-4) in which constituent units derived from polybasic acid having aromatic rings and monofunctional carboxylic acid were 50 mol% based on the total amount of carboxyl group components, and constituent units derived from polyhydric alcohol having alkylene oxide chains were 25 mol% based on the total amount of hydroxyl group components. The number average molecular weight was 1,600, the acid value was 3.4 mgKOH/g, and the hydroxyl value was 67 mgKOH/g.

### (Synthesis Example 5) Polyester polyol (al-5)

157 parts of isophthalic acid, 550 parts of adipic acid, 94.9 parts of ethylene glycol, and 478 parts of neopentyl glycol were charged into a reaction vessel, and heated to 150-240°C while stirring in a nitrogen gas flow to perform an esterification reaction. When the acid value reached 2.2 (mgKOH/g), the reaction temperature was set to 200°C, the inside of the reaction vessel was gradually depressurized, and the reaction was performed at 1.3 kPa or less for 30 minutes, followed by cooling to 110°C. Thereafter, 7.0 parts of trimellitic anhydride was added and acid-modified at 110°C to obtain polyester polyol (al-5) in which constituent units derived from polybasic acid having aromatic rings and monofunctional carboxylic acid were 20 mol% based on the total amount of carboxyl group components, and constituent units derived from polyhydric alcohol having alkylene oxide groups were 0 mol% based on the total amount of hydroxyl group components. The number average molecular weight was 750, the acid value was 3.8 mgKOH/g, and the hydroxyl value was 104 mgKOH/g.

### (Synthesis Example 6) Polyester polyol (a2-1)

100 parts of adipic acid and 90 parts of diethylene glycol were charged into a reaction vessel, and heated to 150-240°C while stirring in a nitrogen gas flow to perform an esterification reaction. When the acid value reached 2.0 (mgKOH/g), the reaction temperature was set to 200°C, the inside of the reaction vessel was gradually depressurized, and the reaction was performed at 1.3 kPa or less for 30 minutes to obtain polyester polyol (a2-1) in which constituent units derived from polybasic acid having aromatic rings and monofunctional carboxylic acid were 0 mol% based on the total amount of carboxyl group components, and constituent units derived from polyhydric alcohol having alkylene oxide groups were 100 mol% based on the total amount of hydroxyl group components. The number average molecular weight was 2,000, the acid value was 0.5 mgKOH/g, and the hydroxyl value was 55 mgKOH/g.

### (Synthesis Example 7) Polyester polyol (a2-2)

100 parts of adipic acid and 77 parts of 2-methyl-1,3-propanediol (MPO) were charged into a reaction vessel, and heated to 150-240°C while stirring in a nitrogen gas flow to perform an esterification reaction. When the acid value reached 2.0 (mgKOH/g), the reaction temperature was set to 200°C, the inside of the reaction vessel was gradually depressurized, and the reaction was performed at 1.3 kPa or less for 30 minutes to obtain polyester polyol (a2-2) in which constituent units derived from polybasic acid having aromatic rings and monofunctional carboxylic acid were 0 mol% based on the total amount of carboxyl group components, and constituent units derived from polyhydric alcohol having alkylene oxide groups were 0 mol% based on the total amount of hydroxyl group components. The number average molecular weight was 2,000, the acid value was 0.5 mgKOH/g, and the hydroxyl value was 55 mgKOH/g.

### (Synthesis Example 8) Polyester polyol (a2-3)

100 parts of adipic acid and 65 parts of 1,2-propanediol were charged into a reaction vessel, and heated to 150-240°C while stirring in a nitrogen gas flow to perform an esterification reaction. When the acid value reached 2.0 (mgKOH/g), the reaction temperature was set to 200°C, the inside of the reaction vessel was gradually depressurized, and the reaction was performed at 1.3 kPa or less for 30 minutes to obtain polyester polyol (a2-3) in which constituent units derived from polybasic acid having aromatic rings and monofunctional carboxylic acid were 0 mol% based on the total amount of carboxyl group components, and constituent units derived from polyhydric alcohol having alkylene oxide groups were 0 mol% based on the total amount of hydroxyl group components. The number average molecular weight was 2,000, the acid value was 0.5 mgKOH/g, and the hydroxyl value was 55 mgKOH/g.

### (Synthesis Example 9) Polyester polyol (a2-4)

92 parts of adipic acid, 9 parts of isophthalic acid, and 90 parts of diethylene glycol were charged into a reaction vessel, and heated to 150-240°C while stirring in a nitrogen gas flow to perform an esterification reaction. When the acid value reached 2.0 (mgKOH/g), the reaction temperature was set to 200°C, the inside of the reaction vessel was gradually depressurized, and the reaction was performed at 1.3 kPa or less for 30 minutes to obtain polyester polyol (a2-1) in which constituent units derived from polybasic acid having aromatic rings and monofunctional carboxylic acid were 8 mol% based on the total amount of carboxyl group components, and constituent units derived from polyhydric alcohol having alkylene oxide groups were 100 mol% based on the total amount of hydroxyl group components. The number average molecular weight was 2,000, the acid value was 0.5 mgKOH/g, and the hydroxyl value was 55 mgKOH/g.

### (Synthesis Example 10) Polyester polyol (a2-5)

100 parts of adipic acid, 69 parts of 2-methyl-1,3-propanediol, and 9 parts of diethylene glycol were charged into a reaction vessel, and heated to 150-240°C while stirring in a nitrogen gas flow to perform an esterification reaction. When the acid value reached 2.0 (mgKOH/g), the reaction temperature was set to 200°C, the inside of the reaction vessel was gradually depressurized, and the reaction was performed at 1.3 kPa or less for 30 minutes to obtain polyester polyol (a2-5) in which constituent units derived from polybasic acid having aromatic rings and monofunctional carboxylic acid were 0 mol% based on the total amount of carboxyl group components, and constituent units derived from polyhydric alcohol having alkylene oxide groups were 10 mol% based on the total amount of hydroxyl group components. The number average molecular weight was 2,000, the acid value was 0.3 mgKOH/g, and the hydroxyl value was 55 mgKOH/g.

### (Synthesis Example 11) Polyester polyol (a3-1)

100 parts of isophthalic acid, 498 parts of adipic acid, 84 parts of ethylene glycol, and 423 parts of neopentyl glycol were charged into a reaction vessel, and heated to 150-240°C while stirring in a nitrogen gas flow to perform an esterification reaction. When the acid value reached 2.0 (mgKOH/g), the reaction temperature was set to 200°C, the inside of the reaction vessel was gradually depressurized, the reaction was performed at 1.3 kPa or less for 30 minutes, and then cooled to 110°C. Thereafter, 5.5 parts of trimellitic anhydride were added and acid-modified at 110°C to obtain polyester polyol (a3-1) in which constituent units derived from polybasic acid having aromatic rings and monofunctional carboxylic acid were 15 mol% based on the total amount of carboxyl group components, and constituent units derived from polyhydric alcohol having alkylene oxide groups were 0 mol% based on the total amount of hydroxyl group components. The number average molecular weight was 750, the acid value was 3.6 mgKOH/g, and the hydroxyl value was 104 mgKOH/g.

### (Synthesis Example 12) Polyester polyol (a3-2)

100 parts of isophthalic acid, 498 parts of adipic acid, 84 parts of ethylene glycol, and 423 parts of neopentyl glycol were charged into a reaction vessel, and heated to 150-240°C while stirring in a nitrogen gas flow to perform an esterification reaction. When the acid value reached 2.0 (mgKOH/g), the reaction temperature was set to 200°C, the inside of the reaction vessel was gradually depressurized, and the reaction was performed at 1.3 kPa or less for 30 minutes to obtain polyester polyol (a3-2) in which constituent units derived from polybasic acid having aromatic rings and monofunctional carboxylic acid were 15 mol% based on the total amount of carboxyl group components, and constituent units derived from polyhydric alcohol having alkylene oxide groups were 0 mol% based on the total amount of hydroxyl group components. The number average molecular weight was 750, the acid value was 0.5 mgKOH/g, and the hydroxyl value was 107 mgKOH/g.

### [Table 1]

**Table 1.**

| | | Molecula r weight | a1-1 | a1-2 | a1-3 | a1-4 | a1-5 | a2-1 | a2-2 | a2-3 | a2-4 | a2-5 | a3-1 | a3-2 |
|---|---|---|---|---|---|---|---|---|---|---|---|---|---|---|
| Carboxyl group components | isophthalic acid | 166 | 175 | 274 | 100 | 100 | 157 | | | | 9 | | 100 | 100 |
| | adipic acid | 146 | 320 | 447 | 88 | 88 | 550 | 100 | 100 | 100 | 92 | 100 | 498 | 498 |
| | benzoic acid | 122 | 49 | | | | | | | | | | | |
| Hydroxyl group components | ethylene glycol | 62 | 76 | 94.9 | 24 | 72 | 94.9 | | | | | | 84 | 84 |
| | neopentyl glycol | 104 | 380 | 478 | | | 478 | | | | | | 423 | 423 |
| | diethylene glycol | 106 | | | 125 | 42 | | 90 | | | 90 | 9 | | |
| | MPO | 90 | | | | | | | 77 | | | 69 | | |
| | 1,2-propanediol | 76 | | | | | | | | 65 | | | | |
| Acid modification | TMA | | 5.0 | 7.0 | 2.0 | 2.0 | 7.0 | | | | | | 5.5 | |
| proportion (mol%) of constituent units derived from aromatic rings | | | 40 | 35 | 50 | 50 | 20 | 0 | 0 | 0 | 8 | 0 | 15 | 15 |
| AO group 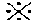 -derived constituent unit ratio (mol%) | | | 0 | 0 | 75 | 25 | 0 | 100 | 0 | 0 | 100 | 10 | 0 | 0 |
| Mn | | | 750 | 750 | 1,60 0 | 1,60 0 | 750 | 2,00 0 | 2,00 0 | 2,00 0 | 2,00 0 | 2,00 0 | 750 | 750 |
| AV(mgKOH/g) | | | 3.6 | 3.8 | 3.5 | 3.4 | 3.8 | 0.5 | 0.5 | 0.5 | 0.5 | 0.3 | 3.6 | 0.5 |
| OHV(mgKOH/g) | | | 104 | 104 | 67 | 67 | 104 | 55 | 55 | 55 | 55 | 55 | 104 | 107 |

| | | | | | | | | | | | | | | |
|---|---|---|---|---|---|---|---|---|---|---|---|---|---|---|
| 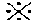 : AO group = alkylene oxide groups | | | | | | | | | | | | | | |

### <Adjustment of polyol main agent (A)>

### (Polyol main agents A-1 to A-14)

The components were blended according to the blending composition shown in Table 2 to adjust the polyol main agent.

### [Table 2]

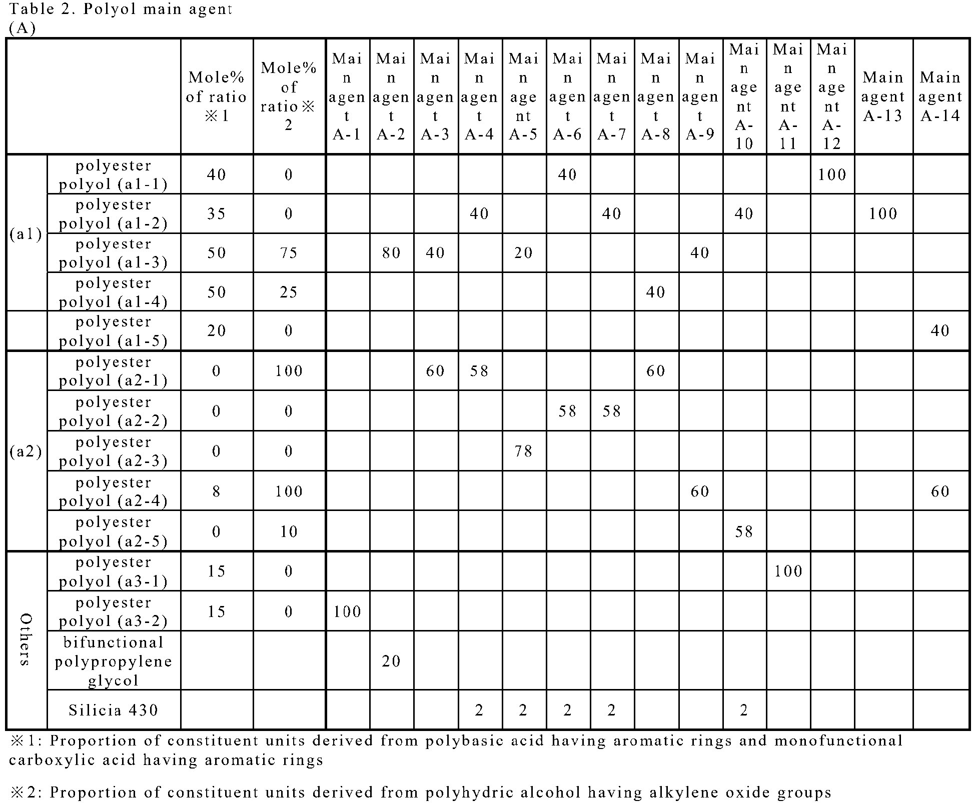

### <Synthesis of polyisocyanate>

### (Synthesis Example 13) Aliphatic polyisocyanate (b-1)

75 parts of Takenate 500 (xylene diisocyanate) and 200 parts of polyester polyol (a2-2) were charged into a reaction vessel, and the reaction was performed at 110°C for 4 hours while stirring in a nitrogen gas flow to obtain aliphatic polyisocyanate (b-1) having urethane bonds.

### (Synthesis Example 14) Aliphatic polyisocyanate (b-2)

219.9 parts of HDI biuret (product name: Basonat HB-100, manufactured by BASF) and 30.1 parts of cyclohexanol were charged into a reaction vessel, and the reaction was performed at 110°C for 4 hours while stirring in a nitrogen gas flow to obtain aliphatic polyisocyanate (b-2) having urethane bonds.

### <Adjustment of Polyisocyanate curing Agent (B)>

Polyisocyanates were blended according to the blending composition shown in Table 3 to adjust polyisocyanate curing agents.

### [Table 3]

| Table 3. Polyisocyanate curing agent (B) | | | |
|---|---|---|---|
| | Curing agent B-1 | Curing agent B-2 | Curing agent B-3 |
| aliphatic polyisocyanate (b-1) | | 10 | |
| aliphatic polyisocyanate (b-2) | | | 30 |
| HDI biuret | 30 | 30 | |
| HDI nurate | 50 | 40 | 50 |
| IPDI nurate | 20 | 20 | 20 |

The abbreviations in Table 3 are shown below.
- HDI biuret: aliphatic polyisocyanate (product name: Basonat HB-100, manufactured by BASF)
- HDI nurate: aliphatic polyisocyanate (product name: Takenate D177N, manufactured by Mitsui Chemicals)
- IPDI nurate: aliphatic polyisocyanate (product name: VESTANAT T1890/100, manufactured by Evonik)

### <Adjustment of Solventless Adhesive>

### [Adhesives 1 to 18]

Polyol main agent (A) and polyisocyanate curing agent (B) were mixed at the mass ratios shown in Table 4 to adjust Adhesives 1 to 18. For the adjusted adhesives, the viscosity at 40°C after 12 hours in a 40°C environment was measured and shown in Table 4.

**[Table 4]**

| Table 4. Adhesive | | | | |
|---|---|---|---|---|
| | Polyol Main agent | Polyisocyanate Curing agent | Main agent/curing agent <mass ratio> | After blending for 12 hours at 40°C viscosity over time <Pa·s@40°C> |
| Adhesive 1 | A-1 | B-1 | 100/100 | 50 |
| Adhesive 2 | A-2 | B-1 | 100/100 | 60 |
| Adhesive 3 | A-3 | B-1 | 100/100 | 60 |
| Adhesive 4 | A-4 | B-1 | 100/100 | 60 |
| Adhesive 5 | A-5 | B-1 | 100/100 | 60 |
| Adhesive 6 | A-6 | B-1 | 100/100 | 55 |
| Adhesive 7 | A-7 | B-1 | 100/100 | 60 |
| Adhesive 8 | A-7 | B-1 | 100/120 | 75 |
| Adhesive 9 | A-7 | B-1 | 100/80 | 50 |
| Adhesive 10 | A-8 | B-1 | 100/100 | 60 |
| Adhesive 11 | A-9 | B-1 | 100/100 | 70 |
| Adhesive 12 | A-10 | B-1 | 100/100 | 60 |
| Adhesive 13 | A-7 | B-2 | 100/100 | 70 |
| Adhesive 14 | A-7 | B-3 | 100/100 | 55 |
| Adhesive 15 | A-14 | B-1 | 100/100 | 60 |
| Adhesive 16 | A-11 | B-1 | 100/100 | 100 |
| Adhesive 17 | A-12 | B-1 | 100/50 | 140 |
| Adhesive 18 | A-13 | B-1 | 100/100 | 160 |

### <Production of packaging Material>

### [Examples 1 to 14, Comparative Examples 1 to 3]

A packaging material of transparent vapor-deposited PET (with a thickness of 12 µm, GL-ARH (manufactured by Toppan Printing Co., Ltd.))/printing layer/adhesive layer/nylon (with a thickness of 15 µm, Emblem ONBC (manufactured by Unitika Ltd.), hereinafter described as NY)/adhesive layer/unstretched polypropylene (with a thickness of 70 µm, Treefan ZK207 (manufactured by Toray Industries, Inc.), hereinafter described as CPP) was prepared by the following method.

First, a printing layer having printed portions and plain portions was formed on the transparent vapor-deposited PET by using the white ink of LP Bio (manufactured by Toyo Ink Co., Ltd.) through gravure printing. The thickness of the printed portions was 1 µm.

After the printing layer was formed, the solventless adhesive obtained above was applied on the printing layer by using a non-solvent laminator (SuperSimplex SL, manufactured by Nordmeccanica) at a coating roll temperature of 70°C and a coating speed of 200 m/min with a coating amount of 2.0 g/m², and the coated surface and NY were bonded.

Next, the same solventless adhesive as before was applied to the NY surface of the bonded transparent vapor-deposited PET/NY by using the non-solvent laminator at the coating roll temperature of 70°C and the coating speed of 200 m/min with the coating amount of 2.0 g/m², and t the coated surface and CPP were bonded.

Next, the obtained laminate was aged in an environment of 40°C for 72 hours to obtain a packaging material.

### < Evaluation of packaging material >

The obtained packaging materials were evaluated for appearance and retort resistance by the following methods. The evaluation results are shown in Table 5.

### [Evaluation of appearance]

For the printed portion and the plain portion of the obtained packaging material, imaging was performed from the CPP surface at an observation magnification of 50× by using a microscope (product name "VHX-6000": manufactured by Keyence Corporation). Next, binarization processing was performed on the obtained images, and the area ratios of bubble portions to the total areas of the observation images were measured as a result of quantitative observation and classified according to the following criteria.
A: Bubble area ratio less than 0.5% (extremely good)
B: Bubble area ratio of 0.5% or more and less than 1.0% (good)
C: Bubble area ratio of 1.0% or more and less than 2.0% (somewhat good)
D: Bubble area ratio of 2.0% or more and less than 3.0% (practical lower limit)
E: Bubble area ratio of 3.0% or more (unusable)

### [Retort Resistance]

For the obtained package, bags in a size of 14 cm × 18 cm were prepared by heat sealing at 190°C for 1 second, with the CPP on the inside. The heat sealing width was 15 mm. As contents, a mixture of 3% acetic acid aqueous solution/ketchup/salad oil in a mass ratio of 1:1:1 was filled. The bags were subjected to hot water sterilization using a rotary retort tester under a pressurized condition of 30 rpm, 135°C, for 30 minutes. After sterilization, the heat sealed portions of the bags were cut to a width of 15 mm, and the heat seal strengths were measured by tensile testing at a peeling speed of 300 mm/min in an environment of 25°C and 50% relative humidity.
A: heat seal strength of 50N or more (extremely good)
B: heat seal strength of 40N or more and less than 50N (good)
C: heat seal strength of 30N or more and less than 40N (somewhat good)
D: heat seal strength of 20N or more and less than 30N (lower limit for actual practice)

**[Table 5]**

| Table 5. packaging material | | | | |
|---|---|---|---|---|
| | Adhesive used | Appearance (printed portion) | Appearance (plain area) | Retort resistance |
| Example 1 | Adhesive 1 | D | B | C |
| Example 2 | Adhesive 2 | C | C | D |
| Example 3 | Adhesive 3 | B | C | C |
| Example 4 | Adhesive 4 | B | B | B |
| Example 5 | Adhesive 5 | B | A | C |
| Example 6 | Adhesive 6 | A | A | A |
| Example 7 | Adhesive 7 | A | A | A |
| Example 8 | Adhesive 8 | B | A | A |
| Example 9 | Adhesive 9 | A | A | B |
| Example 10 | Adhesive 10 | B | C | C |
| Example 11 | Adhesive 11 | C | C | D |
| Example 12 | Adhesive 12 | A | A | B |
| Example 13 | Adhesive 13 | B | B | A |
| Example 14 | Adhesive 14 | A | A | A |
| Example 15 | Adhesive 15 | B | C | D |
| Comparative Example 1 | Adhesive 16 | E | E | C |
| Comparative Example 2 | adhesive 17 | E | E | B |
| Comparative Example 3 | adhesive 18 | E | E | C |

As shown in this example, it was found that the packaging material according to the disclosure is a packaging material that combines high appearance and high retort performance.

This application claims the priority right based on Japanese Patent Application No. 2023-133676 filed on August 18, 2023, the entire disclosure of which is incorporated herein.

## Claims

1. A packaging material for heat-sterilized food, the packaging material comprising:
in order, at least a transparent vapor-deposited film layer, an adhesive layer, and a plastic film layer,
wherein the adhesive layer is a cured product of a solventless adhesive,
the solventless adhesive comprises: a polyol main agent (A), containing polyester polyol; and a polyisocyanate curing agent (B), containing aliphatic polyisocyanate, wherein a viscosity at 40°C is of 80 Pa·s or less after 12 hours at 40°C after blending of the polyol main agent (A) and the polyisocyanate curing agent (B),
the polyol main agent (A) comprises a first polyester polyol (a1), and
the first polyester polyol (a1) has constituent units derived from polybasic acid having aromatic rings and/or monofunctional carboxylic acid having aromatic rings, and contains the constituent units in a total amount of 20 mol% or more based on a total amount of carboxyl group components.

2. The packaging material as claimed in claim 1, wherein:
the first polyester polyol (a1) contains constituent units derived from polyhydric alcohol having alkylene oxide groups in an amount of 0 to 30 mol% based on a total amount of hydroxyl group components.

3. The packaging material as claimed in claim 1 or 2, wherein:
the polyol main agent (A) further contains a second polyester polyol (a2),
the second polyester polyol (a2) has constituent units derived from polybasic acid having aromatic rings and/or monofunctional carboxylic acid having aromatic rings, and contains the constituent units in a total amount of 10 mol% or less based on the total amount of carboxyl group components.

4. The packaging material as claimed in claim 3, wherein:
the second polyester polyol (a2) contains 0 to 20 mol% of constituent units derived from polyhydric alcohol having alkylene oxide groups based on a total amount of hydroxyl group components.

5. The packaging material as claimed in any one of claims 1 to 4, wherein the solventless adhesive contains an inorganic filler.
